# EUROPÄISCHE PATENTSCHRIFT

(11) **EP 3 931 576 B1**
(45) Veröffentlichungstag und Bekanntmachung des Hinweises auf die Patenterteilung: **24.05.2023**
(21) Anmeldenummer: 20709128.1
(22) Anmeldetag: 19.02.2020
(51) Int. Cl.: G01P 3/49, G01P 15/00, G01D 5/20

(54) **VORRICHTUNG UND VERFAHREN ZUM BESTIMMEN EINER GESCHWINDIGKEIT ODER BESCHLEUNIGUNG EINES ELEKTRISCH LEITFÄHIGEN OBJEKTS, SOWIE SYSTEM**
DEVICE AND METHOD FOR DETERMINING THE SPEED OR ACCELERATION OF AN ELECTRICALLY CONDUCTIVE OBJECT, AND SYSTEM
DISPOSITIF ET PROCÉDÉ SERVANT À DÉTERMINER UNE VITESSE OU UNE ACCÉLÉRATION D'UN OBJET ÉLECTRO-CONDUCTEUR, AINSI QUE SYSTÈME

(30) Priorität: 01.03.2019 DE 102019105203
(43) Veröffentlichungstag der Anmeldung: 05.01.2022
(73) Patentinhaber: Schaeffler Technologies AG & Co. KG, 91074 Herzogenaurach (DE)
(72) Erfinder: PSCHYKLENK, Michael, 91740 Röckingen (DE)
(86) Internationale Anmeldenummer: PCT/DE2020/100115
(87) Internationale Veröffentlichungsnummer: WO 2020/177811

(56) Entgegenhaltungen:
- DE-A1- 3 147 819
- DE-A1- 10 125 097
- DE-A1- 10 139 379
- DE-C1- 10 039 324
- US-A- 4 441 077

## Beschreibung

Die Erfindung betrifft eine Vorrichtung und ein Verfahren zum Bestimmen einer Geschwindigkeit oder Beschleunigung eines elektrisch leitfähigen Objekts in einer vorgegebenen Bewegungsrichtung. Ferner betrifft die Erfindung ein System mit einem elektrisch leitfähigen Objekt und mit einer derartigen Vorrichtung.

Derartige Vorrichtungen werden auch als Ferraris-Sensoren bezeichnet und umfassen typischerweise einen Magnet, mit dem ein äußeres Magnetfeld erzeugt wird, welches in einer Feldrichtung senkrecht zur Bewegungsrichtung des Objekts verläuft. Das äußere Magnetfeld induziert in dem sich bewegenden elektrisch leitfähigen Objekt Wirbelströme, die ein dem äußeren Magnetfeld entgegengesetztes inneres Magnetfeld erzeugen. Die Flussdichte dieses inneren Magnetfelds ist proportional zu der Geschwindigkeit des Objekts. Mithilfe eines Sensors kann die Flussdichte oder deren Änderung erfasst werden und daraus auf die Geschwindigkeit bzw. die Beschleunigung des Objekts zurückgeschlossen werden. Eine beispielhafte Vorrichtung zum Bestimmen einer Beschleunigung eines elektrisch

leitfähigen Objekts wird in der EP 1 395 836 B1 beschrieben, welche die DE 101 25 097 A1 als Priorität hat. Bei dieser Vorrichtung sind mehrere als Detektorspulen ausgebildete Sensoren und mehrere Magnete abwechselnd in der Bewegungsrichtung nebeneinander angeordnet. Die bekannte Vorrichtung eignet sich gut zur Erfassung der Bewegung von nichtmagnetischen Objekten. Als nachteilig hat sich allerdings erwiesen, dass in solchen Anwendungsfällen, in denen das elektrisch leitfähige Objekt aus einem magnetisierbaren Material gebildet ist bzw. eine ggf. veränderliche Magnetisierung aufweist, eine zuverlässige Bestimmung der Beschleunigung nicht möglich ist. Dies liegt darin begründet, dass Änderungen des Abstands zwischen dem sich bewegenden Objekt und dem Sensor sowie Änderungen der Magnetisierung des Objekts zu Änderungen des Messsignals der Detektorspule führen, welche die Größenordnung der durch die Bewegung des Objekts hervorgerufenen Änderungen übersteigt. Somit wird die Güte der Messung beeinträchtigt.

Vor diesem Hintergrund stellt sich die Aufgabe, das Bestimmen einer Geschwindigkeit oder Beschleunigung eines elektrisch leitfähigen, insbesondere magnetisierbaren, Objekts mit erhöhter Zuverlässigkeit zu ermöglichen.

Die Aufgabe wird gelöst durch eine Vorrichtung zum Bestimmen einer Geschwindigkeit oder Beschleunigung eines elektrisch leitfähigen Objekts in einer vorgegebenen Bewegungsrichtung,
- mit mindestens zwei ersten Magneten zur Erzeugung jeweils eines äußeren Magnetfelds senkrecht zur Bewegungsrichtung und
- mit mindestens einem ersten Sensor zur Erfassung eines durch Wirbelströme in dem Objekt hervorgerufenen inneren Magnetfelds, wobei eine Messachse des ersten Sensors senkrecht zur Bewegungsrichtung verläuft und die mindestens zwei ersten Magneten sowie der mindestens eine erste Sensor in der Bewegungsrichtung voneinander beabstandet angeordnet sind, wobei jeweils ein erster Sensor zwischen zwei ersten Magneten angeordnet ist,
- mit mindestens zwei zweiten Magneten zur Erzeugung jeweils eines äußeren Magnetfelds senkrecht zur Bewegungsrichtung, die jeweils mit einem der mindestens zwei ersten Magneten auf einer gemeinsamen Magnetachse angeordnet sind, welche senkrecht zur Messachse und senkrecht zur Bewegungsrichtung angeordnet ist und wobei der erste Magnet und der zweite Magnet aus einer solchen gemeinsamen Magnetachse entgegengesetzt polarisiert sind,
- mit mindestens einem zweiten Sensor zur Erfassung eines durch Wirbelströme in dem Objekt hervorgerufenen inneren Magnetfelds, der zusammen mit dem ersten Sensor auf einer gemeinsamen Sensorachse parallel zu den Magnetachsen angeordnet ist, wobei eine Messachse des zweiten Sensors parallel zu der Messachse des ersten Sensors angeordnet ist, wobei jeweils ein zweiter Sensor zwischen zwei zweiten Magneten angeordnet ist, und
- mit einer Auswerteeinrichtung zur Bestimmung einer Geschwindigkeit oder Beschleunigung des Objekts anhand der durch den ersten Sensor und den zweiten Sensor erfassten inneren Magnetfelder, indem
die Auswerteeinrichtung dazu eingerichtet ist, ein erstes Messignal des ersten Sensors und ein zweites Messignal des zweiten Sensors zu empfangen und zur Bestimmung der Geschwindigkeit oder Beschleunigung eine Differenz des ersten Messignals und des zweiten Messignals zu bilden.

Bei der erfindungsgemäßen Vorrichtung wird sowohl mittels des ersten als auch mittels des zweiten Magnets ein äußeres Magnetfeld erzeugt, welches in dem sich bewegenden Objekt Wirbelströme induzieren kann. Dadurch, dass der erste und der zweite Magnet auf einer gemeinsamen Magnetachse und der erste und der zweite Sensor auf einer gemeinsamen Sensorachse angeordnet sind, ist es möglich, den Einfluss externer Magnetfelder, d. h. eine Vormagnetisierung des zu messenden Objekts, in der Auswerteeinrichtung zu kompensieren. Ebenso können Änderungen des Abstands zwischen dem bewegten Objekt und den Sensoren kompensiert werden. Sowohl der erste Sensor als auch der zweite Sensor erfassen dieselben externen Magnetfelder. Da der erste Magnet und der zweite Magnet entgegengesetzt polarisiert sind, induzieren die Magnete in dem sich bewegenden Objekt Wirbelströme entgegengesetzter Richtung. Die aus den Wirbelströmen resultierenden internen Magnetfelder weisen denselben Betrag auf, sind aber entgegengesetzt ausgerichtet. Die Sensoren erfassen daher neben dem äußeren Magnetfeld auch die internen Magnetfelder entgegengesetzter Polarität. Weil die äußeren Magnetfelder, die durch den ersten und den zweiten Sensor gemessen werden, identisch sind, ist es mittels der Auswerteeinrichtung möglich, den Einfluss der äußeren Magnetfelder zu kompensieren. Ebenso können Änderungen des Abstands zwischen dem Objekt und den beiden Sensoren kompensiert werden. Folglich kann eine erhöhte Zuverlässigkeit bei der Bestimmung der Geschwindigkeit oder Beschleunigung erreicht werden.

Gemäß der erfindungsmäßen Ausgestaltung ist vorgesehen, dass die Auswerteeinrichtung dazu eingerichtet ist, ein erstes Messignal des ersten Sensors und ein zweites Messignal des zweiten Sensors zu empfangen und zur Bestimmung der Geschwindigkeit oder Beschleunigung eine Differenz des ersten Messignals und des zweiten Messignals zu bilden. Durch die Differenzbildung kann der Einfluss des äußeren Magnetfelds, d. h. einer Vormagnetisierung des zu messenden Objekts, bzw. von Abstandsänderungen zwischen Objekt und Vorrichtung auf die Messung eliminiert werden. Aus der Differenzbildung kann ein Differenzwert erhalten werden, der dem zweifachen Betrag des Messsignals entspricht. Dieser Differenzwert ist im Wesentlichen abhängig von der Geschwindigkeit bzw. der Beschleunigung des bewegten Objekts.

Bevorzugt ist der erste Magnet und/oder der zweite Magnet als Permanentmagnet ausgebildet, wodurch eine kompakte Ausgestaltung der Vorrichtung ermöglicht werden kann. Alternativ bevorzugt ist es, wenn der erste Magnet und/oder der zweite Magnet als Elektromagnet ausgebildet ist, so dass das durch den jeweiligen Magnet erzeugte äußere Magnetfeld eingestellt werden kann. Es sind mehrere erste Magnete und mehrere zweite Magnete vorgesehen, wobei die ersten Magnete bevorzugt identisch ausgebildet und die zweiten Magnete bevorzugt identisch ausgebildet sind. Bevorzugt sind mehrere erste Magnete derart entlang der Bewegungsrichtung angeordnet, dass benachbarte erste Magnete eine entgegengesetzte Polarisierung aufweisen. Mehrere zweite Magneten sind vorteilhafterweise derart entlang der Bewegungsrichtung angeordnet, dass benachbarte zweite Magnete eine entgegengesetzte Polarisierung aufweisen.

Gemäß einer vorteilhaften Ausgestaltung ist der mindestens eine erste Sensor und/oder der mindestens eine zweite Sensor ein Hall-Sensor. Durch den Hall-Sensor kann ein Messsignal, insbesondere eine Hallspannung, erhalten werden, welches proportional zu der magnetischen Flussdichte des gemessenen Magnetfelds ist. Die magnetische Flussdichte ist proportional zu der Geschwindigkeit des bewegten Objekts, so dass die Auswerteeinrichtung anhand des Messsignals des Hall-Sensors die Geschwindigkeit bestimmen kann. Eine alternative, vorteilhafte Ausgestaltung sieht vor, dass der mindestens eine erste Sensor und/oder der mindestens eine zweite Sensor eine Messspule ist. Die Messspule kann ein Messsignal, insbesondere eine induzierte Spannung, erzeugen, welches proportional zu der Änderung der Geschwindigkeit des bewegten Objekts, also der Beschleunigung des Objekts ist. Falls mehrere erste Sensoren und/oder mehrere zweite Sensoren vorgesehen sind, dann sind die ersten Sensoren bevorzugt identisch ausgebildet und/oder die zweiten Sensoren sind identisch ausgebildet. Bevorzugt sind mehrere erste Sensoren derart entlang der Bewegungsrichtung angeordnet, dass sich zwischen zwei benachbarten ersten Sensoren jeweils ein erster Magnet angeordnet ist. Entsprechend ist es bevorzugt, wenn mehrere zweite Sensoren derart entlang der Bewegungsrichtung angeordnet sind, dass sich zwischen zwei benachbarten zweiten Sensoren jeweils ein zweiter Magnet befindet.

Gemäß einer vorteilhaften Ausgestaltung sind in der Bewegungsrichtung mehrere erste Magnete und mehrere erste Sensoren abwechselnd voneinander beabstandet angeordnet und in der Bewegungsrichtung mehrere zweite Magnete und mehrere zweite Sensoren abwechselnd voneinander beabstandet angeordnet. Auf diese Weise kann eine Vorrichtung gebildet werden, welche das Bestimmen einer linearen Bewegung des Objekts über einen vorgegebenen Streckenabschnitt in der Bewegungsrichtung ermöglicht. Bevorzugt sind benachbarte erste Magnete jeweils derart angeordnet, dass sie entgegengesetzt polarisiert sind. Ebenso ist es bevorzugt, wenn benachbarte zweite Magnete jeweils derart angeordnet, dass sie entgegengesetzt polarisiert sind.

Bevorzugt sind die mindestens zwei ersten Magneten, der mindestens eine erste Sensor, die mindestens zwei zweiten Magneten und der mindestens eine zweite Sensor an einem gemeinsamen Abtastkopf angeordnet. Es ist daher möglich, die Vorrichtung als vorgefertigtes Einbauteil auszubilden, welches als Ganzes in ein System, beispielsweise eine Werkzeugmaschine, eingebaut werden kann.

Ein weiterer Gegenstand der Erfindung ist ein System mit einem elektrisch leitfähigen Objekt und mit einer vorstehend beschriebenen Vorrichtung zum Bestimmen einer Geschwindigkeit oder Beschleunigung des elektrisch leitfähigen Objekts in einer vorgegebenen Bewegungsrichtung.

Bei dem System können dieselben Vorteile erreicht werden, wie sie im Zusammenhang mit der Vorrichtung zum Bestimmen der Geschwindigkeit oder Beschleunigung beschrieben worden sind.

Das bewegbare Objekt nimmt in dem System die Funktion eines Wirbelstromkörpers ein, in welchem durch das äußere Magnetfeld des ersten Magnets und des zweiten Magnets Wirbelströme induziert werden. Das Objekt kann der zu überwachende Gegenstand selbst sein oder kann ein an dem zu überwachenden Gegenstand, beispielsweise einem elektrisch nicht leitfähigen Gegenstand, befestigt sein. Ein solcher Gegenstand kann eine drehbar angeordnete Welle, eine drehbar angeordnete Maschinenachse, ein drehbares Teil einer Lagerung, ein bewegbares Teil einer Linearführung sein. Alternativ ist es möglich, dass es sich bei dem Objekt um Rohmaterial oder Halbzeug handelt, welches elektrisch leitfähig ist, beispielsweise ein Blech, ein Rohr, oder eine Stange.

Gemäß einer vorteilhaften Ausgestaltung des Systems ist das Objekt magnetisiert. Das Objekt kann als Permanentmagnet ausgebildet sein oder durch ein bewegbares Magnetspannmittel, insbesondere ein Magnetfutter oder eine Magnetspannplatte, gehalten und magnetisiert sein. Die Vorrichtung zum Bestimmen der Geschwindigkeit oder Beschleunigung ermöglicht es, zum Einspannen durch das Magnetspannmittel erforderliche externe Magnetfelder zu kompensieren.

Bevorzugt ist das Objekt des Systems linear bewegbar angeordnet. Alternativ ist es bevorzugt, wenn das Objekt drehbar angeordnet ist, also in Rotation versetzt werden kann. Hierbei kann die Vorrichtung zum Bestimmen der Geschwindigkeit oder Beschleunigung feststehend angeordnet sein, so dass die Geschwindigkeit oder Beschleunigung einer Relativbewegung des Objekts gegenüber der Vorrichtung bestimmt werden kann.

Ein weiterer Gegenstand der Erfindung ist ein Verfahren zum Bestimmen einer Geschwindigkeit oder Beschleunigung eines elektrisch leitfähigen Objekts in einer vorgegebenen Bewegungsrichtung mit einer erfindungsgemäßen Vorrichtung, wobei
- mittels der mindestens zwei ersten Magneten jeweils ein äußeres Magnetfeld senkrecht zur Bewegungsrichtung erzeugt wird,
- mittels des mindestens einen ersten Sensors ein durch Wirbelströme in dem Objekt hervorgerufenes inneres Magnetfeld erfasst wird,
- mittels der mindestens zwei zweiten Magneten jeweils ein äußeres Magnetfeld senkrecht zur Bewegungsrichtung erzeugt wird, und
- mittels des mindestens einen zweiten Sensors ein durch Wirbelströme in dem Objekt hervorgerufenes inneres Magnetfeld in der Feldrichtung erfasst wird, und
mittels der Auswerteeinrichtung eine Geschwindigkeit oder eine Beschleunigung des Objekts anhand der durch den ersten Sensor und den zweiten Sensor erfassten inneren Magnetfelder bestimmt wird, indem gemäß dem erfindungsgemäßen Verfahren mittels der Auswerteeinrichtung ein erstes Messignal des ersten Sensors und ein zweites Messignal des zweiten Sensors empfangen und zur Bestimmung der Geschwindigkeit oder der Beschleunigung eine Differenz des ersten Messignals und des zweiten Messignals gebildet wird, wobei die bestimmte Geschwindigkeit oder Beschleunigung unabhängig von einem Abstand und/oder einer Vormagnetisierung des Objekts ist.

Bei dem Verfahren können dieselben Vorteile erreicht werden, wie sie im Zusammenhang mit der Vorrichtung zum Bestimmen der Geschwindigkeit oder Beschleunigung beschrieben worden sind. Wie bereits im Zusammenhang mit einer entsprechenden vorteilhaften Ausgestaltung der Vorrichtung erläutert worden ist, kann durch die Differenzbildung der Einfluss des äußeren Magnetfelds bzw. der Einfluss von Abstandsänderungen auf die Messung eliminiert werden.

Alternativ oder zusätzlich können bei dem System und/oder dem Verfahren auch die im Zusammenhang mit der Vorrichtung zum Bestimmen einer Geschwindigkeit oder Beschleunigung eines elektrisch leitfähigen Objekts beschriebenen vorteilhaften Merkmale und Ausgestaltungen allein oder in Kombination Anwendung finden.

Weitere Einzelheiten und Vorteile der Erfindung sollen nachfolgend anhand des in den Zeichnungen dargestellten Ausführungsbeispiels erläutert werden. Hierin zeigt:
- Fig. 1: ein erstes Ausführungsbeispiel eines erfindungsgemäßen Systems in einer schematischen Schnittdarstellung;
- Fig. 2: das System gemäß Fig. 1 in einer schematischen Draufsicht, in der das Objekt durchsichtig gezeigt ist;
- Fig. 3: ein zweites Ausführungsbeispiel eines erfindungsgemäßen Systems in einer schematischen Schnittdarstellung;
- Fig. 4: das System gemäß Fig. 3 in einer schematischen Draufsicht, in der das Objekt durchsichtig gezeigt ist;
- Fig. 5: eine Abwandlung des Systems gemäß Fig. 3 und 4; und
- Fig. 6: ein Blockdiagramm zur Veranschaulichung einer Auswerteeinrichtung, die bei den Systemen nach Fig. 1-5 zur Anwendung kommen kann.

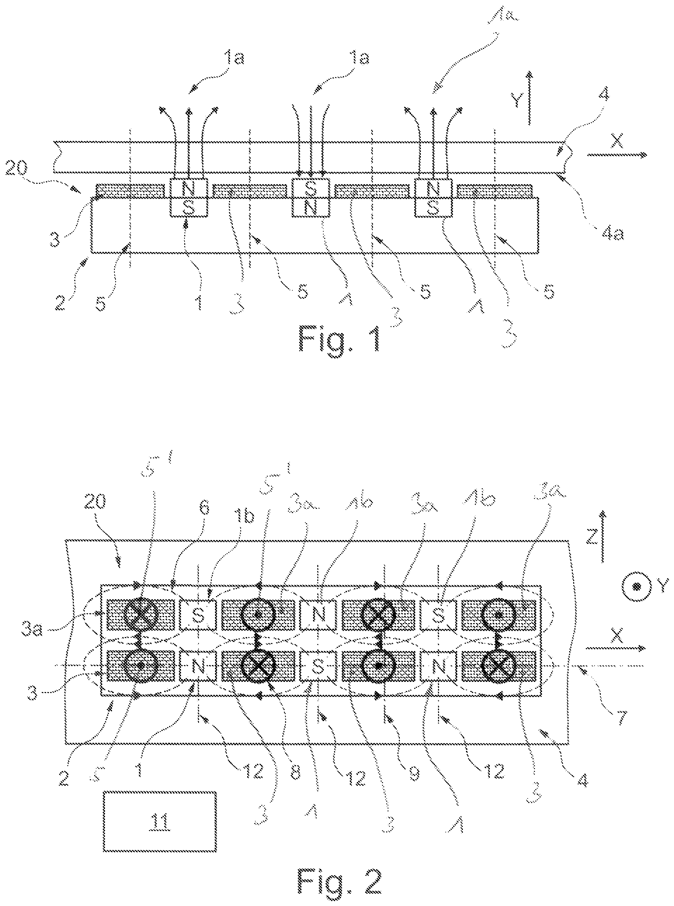

Die Darstellungen in **Fig. 1 und 2** zeigen ein erstes Ausführungsbeispiel eines Systems gemäß der Erfindung, welches ein elektrisch leitfähiges Objekt 4 und eine Vorrichtung 20 zum Bestimmen einer Geschwindigkeit oder Beschleunigung des Objekts 4 in einer vorgegebenen Bewegungsrichtung X umfasst. Bei dem Objekt 4 kann es sich beispielsweise um ein Rohmaterial oder ein Halbzeug eines Fertigungsprozesses handeln, welches linear bewegt wird, z. B. beim Zuführen zu einer in den Figuren nicht dargestellten Werkzeugmaschine. Alternativ kann das Objekt 4 an einem linear bewegbaren Gegenstand angeordnet sein. Das Objekt 4 kann aus einem Metall, beispielsweise Aluminium, Kupfer, Eisen, Stahl, insbesondere Chromstahl, ausgebildet sein. Das Objekt 4 kann zudem magnetisiert sein, beispielsweise durch ein zusammen mit dem Objekt 4 bewegbares Magnetspannmittel, insbesondere ein Magnetfutter oder eine Magnetspannplatte, welches das Objekt 4 hält.

Die Vorrichtung 20 ist nach Art eines Ferraris-Sensors ausgebildet und umfasst mehrere erste Magnete 1, die in der Bewegungsrichtung X zueinander beabstandet angeordnet sind. Die ersten Magnete 1 sind als Permanentmagnete ausgebildet. Benachbarte erste Magnete 1 weisen jeweils eine entgegengesetzte Polarisierung auf, so dass mehrere äußere Magnetfelder 1a parallel und antiparallel zu einer Feldrichtung Y erzeugt werden, die senkrecht zur Bewegungsrichtung X angeordnet ist. Zwischen zwei benachbarten ersten Magneten 1 ist jeweils ein erster Sensor 3 angeordnet, mittels dessen das innere Magnetfeld 8 erfasst wird, welches durch in dem Objekt 4 hervorgerufene Wirbelströme 6 erzeugt wird. Die Messachsen 5, entlang denen die Messung des inneren Magnetfelds 8 durch die Sensoren 3 erfolgt, sind in Fig. 1 dargestellt und verlaufen parallel zur Feldrichtung Y.

Um das Bestimmen der Geschwindigkeit oder Beschleunigung des Objekts 4 mit erhöhter Zuverlässigkeit zu ermöglichen, weist die Vorrichtung 20 zusätzlich zweite Magnete 1b und zweite Sensoren 3a auf. Gemäß dem Ausführungsbeispiel sind die zweiten Magnete 1b als Permanentmagnete ausgebildet. Die zweiten Magnete 1b sind mit den ersten Magneten 1 jeweils auf einer gemeinsamen Magnetachse 12 angeordnet, welche in einer Anordnungsrichtung Z verläuft, die senkrecht zur Feldrichtung Y und senkrecht zur Bewegungsrichtung X angeordnet ist. Zudem sind die ersten Magnete 1 und die jeweils auf derselben Magnetachse 12 angeordneten zweiten Magnete 1b entgegengesetzt polarisiert. Die zweiten Magnete 1b erzeugen somit ebenfalls ein äußeres Magnetfeld 8 senkrecht zur Bewegungsrichtung X, wobei diese jeweils antiparallel zu dem äußeren Magnetfeld des jeweiligen auf derselben Magnetachse 12 angeordneten ersten Magnets 1 ist. Die zweiten Sensoren 3a sind mit den ersten Sensoren 3 jeweils auf einem gemeinsamen Sensorachse 9 angeordnet, die parallel zur Magnetachse 12 verläuft. Die Messachsen der zweiten Sensoren 3a verlaufen parallel zu den Messachsen 5 der ersten Sensoren 3, so dass durch die zweiten Sensoren 3a ebenfalls ein inneres Magnetfeld 8 erfasst werden kann, welches durch Wirbelströme 6 in dem Objekt 4 hervorgerufen wird. Die Magnetachse 12 verläuft parallel zu einer Anordnungsrichtung Z, die senkrecht zu der Bewegungsrichtung X und senkrecht zu der Feldrichtung Y angeordnet ist.

Ein weiterer Bestandteil der Vorrichtung 20 ist eine Auswerteeinrichtung 11 zur Bestimmung einer Geschwindigkeit oder Beschleunigung des Objekts 4 anhand der durch den ersten Sensor 3 und den zweiten Sensor 3a erfassten inneren Magnetfelder 8. Die in Fig. 2 schematisch dargestellte Auswerteeinrichtung 11 ist über in der Fig. 2 nicht gezeigte Signalleitungen mit den ersten Sensoren 3 und den zweiten Sensoren 3a verbunden. Insofern werden der Auswerteeinrichtung 11 Messsignale der ersten und zweiten Sensoren 3, 3a zur Verarbeitung bereitgestellt. Sofern die Sensoren 3, 3a jeweils ein Messsignal erfassen, welches proportional zu der magnetischen Flussdichte des gemessenen Magnetfelds ist, also beispielsweise bei als Hall-Sensoren ausgebildeten Sensoren 3, 3a, kann die Auswerteeinrichtung 11 die Geschwindigkeit des bewegten Objekts 4 ermitteln. Sofern die Sensoren 3, 3a jeweils ein Messsignal erfassen, welches als proportional zu der Änderung der Geschwindigkeit des bewegten Objekts ist, z. B. wenn die Sensoren 3, 3a als Messspulen ausgebildet sind, kann die Auswerteeinrichtung 11 die Beschleunigung des bewegten Objekts 4 ermitteln.

Bei der Vorrichtung 20 sind die ersten und zweiten Magnete 1, 1a sowie die ersten und zweiten Sensoren 3, 3a an einem gemeinsamen Abtastkopf 2 angeordnet. Optional kann auch die Auswerteeinrichtung 11 als Teil des Abtastkopfs 2 ausgebildet sein.

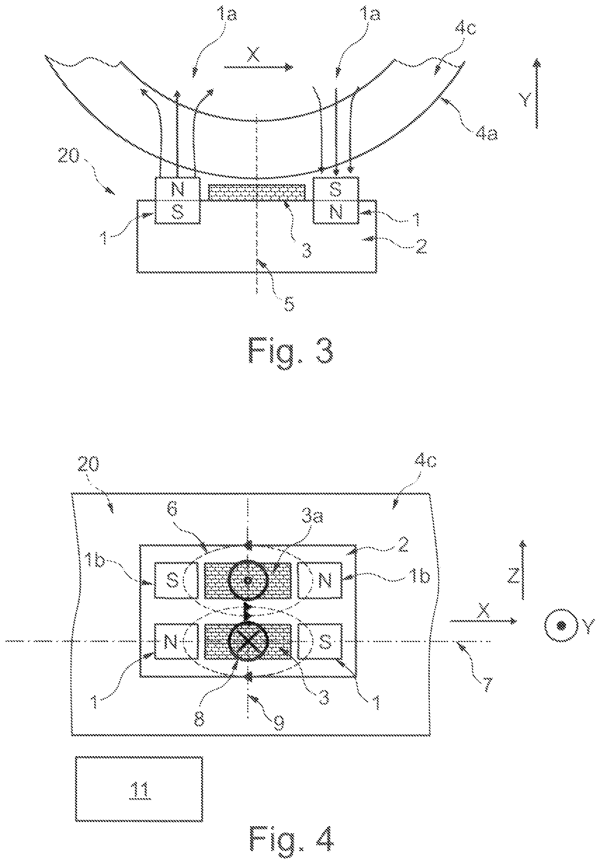

Die Darstellungen in **Fig. 3 und 4** zeigen ein zweites Ausführungsbeispiel eines Systems gemäß der Erfindung mit einem elektrisch leitfähigen Objekt 4c und einer Vorrichtung 20 zum Bestimmen einer Geschwindigkeit oder Beschleunigung des Objekts 4c in einer vorgegebenen Bewegungsrichtung X. Im Unterschied zu dem ersten Ausführungsbeispiel ist das Objekt 4c drehbar gelagert. Beispielsweise in einem drehbaren Futter, insbesondere einem Magnetfutter. Die Vorrichtung 20 umfasst einen Abtastkopf 2, der im Unterschied zu dem Abtastkopf nach Fig. 1 und 2 genau einen ersten Sensor 3 und einen zweiten Sensor 3a aufweist, die auf einer gemeinsamen Sensorachse 9 angeordnet sind. Ferner umfasst der Abtastkopf 2 genau zwei erste Magnete 1 mit entgegengesetzter Polarität und genau zwei zweite Magnete 1b mit entgegengesetzter Polarität. Die Bewegungsrichtung X verläuft tangential zur Drehrichtung des Objekts 4c im Bereich der Messachse 5 des ersten Sensors 3. Der erste Sensor 3 und der zweite Sensor 3a ist in der Bewegungsrichtung X zwischen den ersten bzw. den zweiten Magneten 1, 1b angeordnet.

Im Übrigen wird auf die Ausführungen zu dem in Fig.1 und 2 gezeigten ersten Ausführungsbeispiel verwiesen.

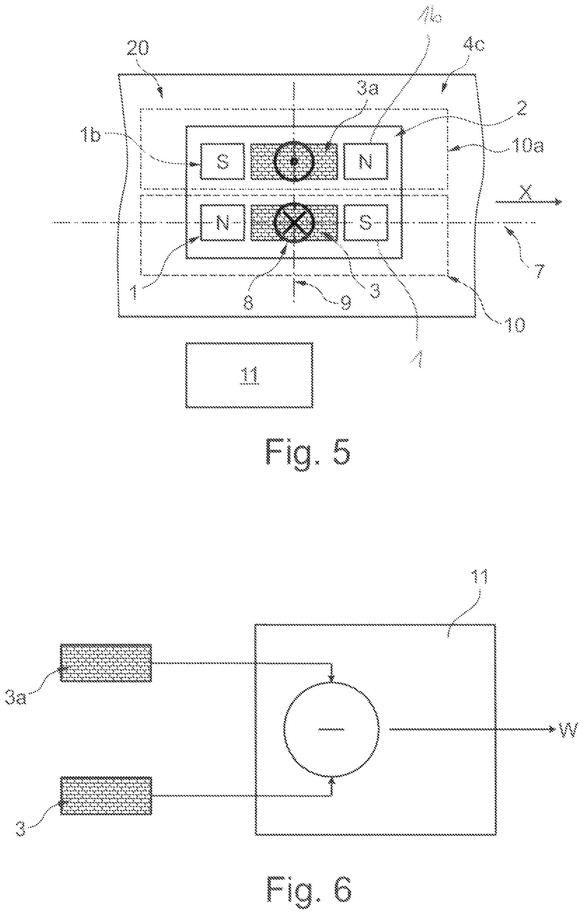

In **Fig. 5** ist eine Abwandlung des zweiten Ausführungsbeispiels gezeigt, bei welcher die Vorrichtung 20 zwei Abtaststreifen 10, 10a aufweist, die zur Bildung des Abtastkopfes zusammengesetzt worden sind. Ein erster Abtaststreifen 10 umfasst die ersten Magnete 1 und den ersten Sensor 3. Ein zweiter Abtaststreifen 10a umfasst die zweiten Magnete 1b und den zweiten Sensor 3a. Die Abtaststreifen 10, 10a sind parallel zueinander angeordnet und verlaufen in Richtung der Bewegungsrichtung X des zu erfassenden Objekts.

Die **Fig. 6** zeigt eine schematische Darstellung einer Auswerteeinrichtung 11, die bei den vorstehend beschriebenen Vorrichtungen 20 Verwendung finden kann. Der Auswerteeinrichtung 11 werden Messsignale des einen oder der mehreren ersten Sensoren 3 und des einen oder der mehreren zweiten Sensoren 3a zugeführt. Bei diesen Messsignalen kann es sich um Messignale handeln, die entweder proportional zu der Geschwindigkeit oder proportional zu der Beschleunigung des Objekts 4, 4c sind. Die Auswerteeinrichtung 11 ist dazu eingerichtet, ein erstes Messignal des ersten Sensors 3 und ein zweites Messignal des zweiten Sensors 3a zu empfangen und eine Differenz des ersten Messignals und des zweiten Messignals zu bilden. Durch die Differenzbildung wird der Einfluss externer Magnetfelder auf das Ergebnis eliminiert und ein Ausgangssignal W erhalten, welches dem zweifachen Betrag des Messsignals entspricht und ausschließlich von der Geschwindigkeit des Objekts abhängt.

Die vorstehend beschriebenen Systeme weisen jeweils eine Vorrichtung 20 zum Bestimmen einer Geschwindigkeit oder Beschleunigung eines elektrisch leitfähigen Objekts 4, 4c in einer vorgegebenen Bewegungsrichtung X auf, die mindestens einen ersten Magnet 1 zur Erzeugung eines äußeren Magnetfelds 1a senkrecht zur Bewegungsrichtung X und mindestens einen ersten Sensor 3 zur Erfassung eines durch Wirbelströme 6 in dem Objekt 4, 4c hervorgerufenen inneren Magnetfelds 8 umfasst, wobei eine Messachse 5 des ersten Sensors 3 senkrecht zur Bewegungsrichtung X verläuft und der erste Magnet 1 sowie der erste Sensor 3 in der Bewegungsrichtung X voneinander beabstandet angeordnet sind. Weitere Bestandteile der Vorrichtung sind mindestens ein zweiter Magnet 1b zur Erzeugung eines äußeren Magnetfelds 1a senkrecht zur Bewegungsrichtung X, der zusammen mit dem ersten Magnet 1 auf einer gemeinsamen Magnetachse 12 angeordnet ist, welche senkrecht zur Messachse 5 und senkrecht zur Bewegungsrichtung X angeordnet ist, wobei der erste Magnet 1 und der zweite Magnet 1b entgegengesetzt polarisiert sind und mindestens ein zweiter Sensor 3a zur Erfassung eines durch Wirbelströme 6 in dem Objekt 4, 4c hervorgerufenen inneren Magnetfelds 8, der zusammen mit dem ersten Sensor 1 auf einer gemeinsamen Sensorachse 9 parallel zu der Magnetachse 12 angeordnet ist, wobei eine Messachse 5' des zweiten Sensors 3a parallel zu der Messachse 5 des ersten Sensors 3 angeordnet ist. Zudem umfasst die Vorrichtung 20 eine Auswerteeinrichtung 11 zur Bestimmung einer Geschwindigkeit oder Beschleunigung des Objekts 4, 4c anhand der durch den ersten Sensor 3 und den zweiten Sensor 3a erfassten inneren Magnetfelder.

### Bezugszeichenliste:

- 1: Magnet
- 1a: äußeres Magnetfeld
- 1b: Magnet
- 2: Abtastkopf
- 3: Sensor
- 3a: Sensor
- 4: Objekt
- 4c: Objekt
- 5, 5': Messachse
- 6: Wirbelstrom
- 7: Anordnungsachse
- 8: inneres Magnetfeld
- 9: Sensorachse
- 10: Abtaststreifen
- 10a: Abtaststreifen
- 11: Auswerteeinheit
- 12: Magnetachse

- W: Ausgangssignal
- X: Bewegungsrichtung
- Y: Feldrichtung
- Z: Anordnungsrichtung

## Patentansprüche

1. Vorrichtung (20) zum Bestimmen einer Geschwindigkeit oder Beschleunigung eines elektrisch leitfähigen Objekts (4, 4c) in einer vorgegebenen Bewegungsrichtung (X),
- mit mindestens zwei ersten Magneten (1) zur Erzeugung jeweils eines äußeren Magnetfelds (1a) senkrecht zur Bewegungsrichtung (X) und
- mit mindestens einem ersten Sensor (3) zur Erfassung eines durch Wirbelströme (6) in dem Objekt (4, 4c) hervorgerufenen inneren Magnetfelds (8), wobei eine Messachse (5) des ersten Sensors (3) senkrecht zur Bewegungsrichtung (X) verläuft und die mindestens zwei ersten Magneten (1) sowie der mindestens eine erste Sensor (3) in der Bewegungsrichtung (X) voneinander beabstandet angeordnet sind, wobei jeweils ein erster Sensor (3) zwischen zwei ersten Magneten (1) angeordnet ist,
- mit mindestens zwei zweiten Magneten (1b) zur Erzeugung jeweils eines äußeren Magnetfelds (1a) senkrecht zur Bewegungsrichtung (X), die jeweils mit einem der mindestens zwei ersten Magneten (1) auf einer gemeinsamen Magnetachse (12) angeordnet sind, welche senkrecht zur Messachse (5) und senkrecht zur Bewegungsrichtung (X) angeordnet ist und wobei der erste Magnet (1) und der zweite Magnet (1b) auf einer solchen gemeinsamen Magnetachse (12) entgegengesetzt polarisiert sind,
- mit mindestens einem zweiten Sensor (3a) zur Erfassung eines durch Wirbelströme (6) in dem Objekt (4, 4c) hervorgerufenen inneren Magnetfelds (8), der zusammen mit dem ersten Sensor (1) auf einer gemeinsamen Sensorachse (9) parallel zu den Magnetachsen (12) angeordnet ist, wobei eine Messachse (5') des zweiten Sensors (3a) parallel zu der Messachse (5) des ersten Sensors (3) angeordnet ist, wobei jeweils ein zweiter Sensor (3a) zwischen zwei zweiten Magneten (1b) angeordnet ist, und
- mit einer Auswerteeinrichtung (11) zur Bestimmung einer Geschwindigkeit oder Beschleunigung des Objekts (4, 4c) anhand der durch den ersten Sensor (3) und den zweiten Sensor (3a) erfassten inneren Magnetfelder (8), indem die Auswerteeinrichtung (11) dazu eingerichtet ist, ein erstes Messignal des ersten Sensors (3) und ein zweites Messignal des zweiten Sensors (3a) zu empfangen und zur Bestimmung der Geschwindigkeit oder Beschleunigung eine Differenz des ersten Messignals und des zweiten Messignals zu bilden.

2. Vorrichtung nach Anspruch 1, **dadurch gekennzeichnet, dass** der erste Magnet (1) und/oder der zweite Magnet (1b) als Permanentmagnet oder als Elektromagnet ausgebildet ist.

3. Vorrichtung nach einem der vorhergehenden Ansprüche, **dadurch gekennzeichnet, dass** der mindestens eine erste Sensor (3) und/oder der mindestens eine zweite Sensor (3b) ein Hall-Sensor oder eine Messspule ist.

4. Vorrichtung nach einem der vorhergehenden Ansprüche, **dadurch gekennzeichnet, dass** in der Bewegungsrichtung (X) mehrere erste Magnete (1) und mehrere erste Sensoren (3) abwechselnd voneinander beabstandet angeordnet sind und in der Bewegungsrichtung (X) mehrere zweite Magnete (3a) und mehrere zweite Sensoren (1b) abwechselnd voneinander beabstandet angeordnet sind.

5. Vorrichtung nach einem der vorhergehenden Ansprüche, **dadurch gekennzeichnet, dass** der die mindestens zwei ersten Magneten (1), der mindestens eine erste Sensor (3), die mindestens zwei zweiten Magneten (1b) und der mindestens eine zweite Sensor (3a) an einem gemeinsamen Abtastkopf (2) angeordnet sind.

6. System mit einem elektrisch leitfähigen Objekt (4, 4c) und mit einer Vorrichtung zum Bestimmen einer Geschwindigkeit oder Beschleunigung des elektrisch leitfähigen Objekts (4, 4c) in einer vorgegebenen Bewegungsrichtung (X) nach einem der vorhergehenden Ansprüche.

7. System nach Anspruch 6, **dadurch gekennzeichnet, dass** das Objekt (4, 4c) magnetisiert ist.

8. Verfahren zum Bestimmen einer Geschwindigkeit oder Beschleunigung eines elektrisch leitfähigen Objekts (4, 4c) in einer vorgegebenen Bewegungsrichtung (X) mit einer Vorrichtung nach einem der Ansprüche 1 bis 5, wobei
- mittels der mindestens zwei ersten Magnete (1) jeweils ein äußeres Magnetfeld (1a) senkrecht zur Bewegungsrichtung (X) erzeugt wird und
- mittels des mindestens einen ersten Sensors (3) ein durch Wirbelströme in dem Objekt hervorgerufenes inneres Magnetfeld (8) erfasst wird, und
- mittels der mindestens zwei zweiten Magnete (1b) jeweils ein äußeres Magnetfeld (1a) senkrecht zur Bewegungsrichtung (X) erzeugt wird, und
- mittels des mindestens einen zweiten Sensors (3a) ein durch Wirbelströme in dem Objekt (4, 4c) hervorgerufenes inneres Magnetfeld (8) in der Feldrichtung (Y) erfasst wird, und
mittels der Auswerteeinrichtung eine Geschwindigkeit oder eine Beschleunigung des Objekts (4, 4c) anhand der durch den ersten Sensor (3) und den zweiten Sensor (3a) erfassten inneren Magnetfelder (8) bestimmt wird, indem mittels der Auswerteeinrichtung ein erstes Messignal des ersten Sensors (3) und ein zweites Messignal des zweiten Sensors (3a) empfangen wird und zur Bestimmung der Geschwindigkeit oder der Beschleunigung eine Differenz des ersten Messignals und des zweiten Messignals gebildet wird, wobei die bestimmte Geschwindigkeit oder Beschleunigung unabhängig von einem Abstand und/oder einer Vormagnetisierung des Objekts (4, 4c) ist.

## Claims

1. A device (20) for determining a speed or acceleration of an electrically conductive object (4, 4c) in a predetermined movement direction (X),
- having at least two first magnets (1) for each producing an external magnetic field (1a) perpendicular to the movement direction (X) and
- having at least one first sensor (3) for detecting an internal magnetic field (8) caused by eddy currents (6) in the object (4, 4c), wherein a measurement axis (5) of the first sensor (3) runs perpendicular to the movement direction (X) and the at least two first magnets (1) and the at least one first sensor (3) are arranged spaced from one another in the movement direction (X), wherein in each case a first sensor (3) is arranged between two first magnets (1) in each case,
- having at least two second magnets (1b) for each producing an external magnetic field (1a) perpendicular to the movement direction (X), which are each arranged with one of the at least two first magnets (1) on a common magnetic axis (12) which is arranged perpendicular to the measurement axis (5) and perpendicular to the movement direction (X) and wherein the first magnet (1) and the second magnet (1b) are oppositely polarised on such a common magnetic axis (12),
- having at least one second sensor (3a) for detecting an internal magnetic field (8) caused by eddy currents (6) in the object (4, 4c) which, together with the first sensor (1), is arranged on a common sensor axis (9) parallel to the magnetic axes (12), wherein a measurement axis (5') of the second sensor (3a) is arranged parallel to the measurement axis (5) of the first sensor (3), wherein in each case a second sensor (3a) is arranged between two second magnets (1b), and
- having an evaluation device (11) for determining a speed or acceleration of the object (4, 4c) based on the internal magnetic fields (8) detected by the first sensor (3) and the second sensor (3a), in that the evaluation device (11) is configured to receive a first measurement signal from the first sensor (3) and a second measurement signal from the second sensor (3a) and to form a difference between the first measurement signal and the second measurement signal in order to determine the speed or acceleration.

2. The device according to claim 1, **characterised in that** the first magnet (1) and/or the second magnet (1b) is designed as a permanent magnet or as an electromagnet.

3. The device according to any one of the preceding claims, **characterised in that** the at least one first sensor (3) and/or the at least one second sensor (3b) is a Hall sensor or a measuring coil.

4. The device according to any one of the preceding claims, **characterised in that**, in the movement direction (X), a plurality of first magnets (1) and a plurality of first sensors (3) are arranged alternately spaced from one another and, in the movement direction (X), a plurality of second magnets (3a) and a plurality of second sensors (1b) are arranged alternately spaced from one another.

5. The device according to any one of the preceding claims, **characterised in that** the at least two first magnets (1), the at least one first sensor (3), the at least two second magnets (1b) and the at least one second sensor (3a) are arranged on a common scanning head (2).

6. A system with an electrically conductive object (4, 4c) and with a device for determining a speed or acceleration of the electrically conductive object (4, 4c) in a predetermined movement direction (X) according to any one of the preceding claims.

7. The system according to claim 6, **characterised in that** the object (4, 4c) is magnetised.

8. A method for determining a speed or acceleration of an electrically conductive object (4, 4c) in a predetermined movement direction (X) using a device according to any one of claims 1 to 5, wherein
- an external magnetic field (1a) perpendicular to the movement direction (X) is generated by means of each of the at least two first magnets (1) and
- an internal magnetic field (8) caused by eddy currents in the object is detected by means of the at least one first sensor (3), and
- an external magnetic field (1a) perpendicular to the movement direction (X) is generated by means of each of the at least two second magnets (1b) and
- an internal magnetic field (8) caused by eddy currents in the object (4, 4c) is detected in the field direction (Y) by means of the at least one second sensor (3a), and
a speed or an acceleration of the object (4, 4c) is determined by means of the evaluation device on the basis of the internal magnetic fields (8) detected by the first sensor (3) and the second sensor (3a), in that a first measurement signal of the first sensor (3) and a second measurement signal of the second sensor (3a) is received and a difference between the first measurement signal and the second measurement signal is formed to determine the speed or the acceleration, wherein the determined speed or acceleration is independent of a distance and/or a pre-magnetisation of the object (4, 4c).

## Revendications

1. Dispositif (20) servant à déterminer une vitesse ou une accélération d'un objet électroconducteur (4, 4c) dans une direction de déplacement (X) prédéterminée,
- comportant au moins deux premiers aimants (1) pour générer respectivement un champ magnétique externe (1a) perpendiculaire à la direction de déplacement (X) et
- comportant au moins un premier capteur (3) pour détecter un champ magnétique interne (8) provoqué par des courants de Foucault (6) dans l'objet (4, 4c), un axe de mesure (5) du premier capteur (3) s'étendant perpendiculairement à la direction de déplacement (X) et au moins lesdits deux premiers aimants (1) et au moins ledit premier capteur (3) étant agencés à distance l'un de l'autre dans la direction de déplacement (X), un premier capteur (3) étant agencé entre deux premiers aimants (1) respectivement,
- comportant au moins deux seconds aimants (1b) pour générer un champ magnétique externe (1a) perpendiculaire à la direction de déplacement (X), lesquels sont chacun agencés avec l'un au moins des dits deux premiers aimants (1) sur un axe magnétique commun (12), lequel est agencé perpendiculairement à l'axe de mesure (5) et perpendiculairement à la direction de déplacement (X) et le premier aimant (1) et le second aimant (1b) étant polarisés de manière opposée sur un tel axe magnétique commun (12),
- comportant au moins un second capteur (3a) pour détecter un champ magnétique interne (8) provoqué par des courants de Foucault (6) dans l'objet (4, 4c) qui, avec le premier capteur (1), est agencé sur un axe de capteur commun (9) parallèle aux axes magnétiques (12), un axe de mesure (5') du second capteur (3a) étant agencé parallèlement à l'axe de mesure (5) du premier capteur (3), un second capteur (3a) étant agencé entre deux seconds aimants (1b) respectivement et
- comportant un dispositif d'évaluation (11) pour déterminer une vitesse ou une accélération de l'objet (4, 4c) sur la base des champs magnétiques internes (8) détectés par le premier capteur (3) et le second capteur (3a), en ce que le dispositif d'évaluation (11) est conçu pour recevoir un premier signal de mesure du premier capteur (3) et un second signal de mesure du second capteur (3a) et former une différence entre le premier signal de mesure et le second signal de mesure pour déterminer la vitesse ou l'accélération.

2. Dispositif selon la revendication 1, **caractérisé en ce que** le premier aimant (1) et/ou le second aimant (1b) est conçu sous forme d'un aimant permanent ou d'un électroaimant.

3. Dispositif selon l'une quelconque des revendications précédentes, **caractérisé en ce qu'**au moins ledit premier capteur (3) et/ou au moins ledit second capteur (3b) est un capteur à effet Hall ou une bobine de mesure.

4. Dispositif selon l'une quelconque des revendications précédentes, **caractérisé en ce que** plusieurs premiers aimants (1) et plusieurs premiers capteurs (3) sont agencés en alternance à distance les uns des autres dans la direction de déplacement (X) et plusieurs seconds aimants (3a) et plusieurs seconds capteurs (1b) sont agencés en alternance à distance les uns des autres dans la direction de déplacement (X).

5. Dispositif selon l'une quelconque des revendications précédentes, **caractérisé en ce qu'**au moins lesdits deux premiers aimants (1), au moins ledit premier capteur (3), au moins lesdits deux seconds aimants (1b) et au moins ledit second capteur (3a) sont agencés sur une tête de balayage commune (2).

6. Système comportant un objet électroconducteur (4, 4c) et un dispositif servant à déterminer une vitesse ou une accélération de l'objet électroconducteur (4, 4c) dans une direction de déplacement (X) prédéterminée selon l'une quelconque des revendications précédentes.

7. Système selon la revendication 6, **caractérisé en ce que** l'objet (4, 4c) est magnétisé.

8. Procédé servant à déterminer une vitesse ou une accélération d'un objet électroconducteur (4, 4c) dans une direction de déplacement (X) prédéterminée à l'aide d'un dispositif selon l'une quelconque des revendications 1 à 5, dans lequel
- un champ magnétique externe (1a) perpendiculaire à la direction de déplacement (X) est généré au moyen au moins des dits deux premiers aimants (1) et
- un champ magnétique interne (8) provoqué par des courants de Foucault dans l'objet est détecté au moyen au moins dudit premier capteur (3) et
- un champ magnétique externe (1a) perpendiculaire à la direction de déplacement (X) est généré au moyen au moins des dits deux seconds aimants (1b) et
- un champ magnétique interne (8) provoqué par des courants de Foucault dans l'objet (4, 4c) est détecté dans la direction de champ (Y) au moyen au moins dudit second capteur (3a) et
une vitesse ou une accélération de l'objet (4, 4c) est déterminée au moyen du dispositif d'évaluation sur la base des champs magnétiques internes (8) détectés par le premier capteur (3) et le second capteur (3a), en ce qu'un premier signal de mesure du premier capteur (3) et un second signal de mesure du second capteur (3a) sont reçus et une différence entre le premier signal de mesure et le second signal de mesure est formée pour déterminer la vitesse ou l'accélération au moyen du dispositif d'évaluation, la vitesse ou l'accélération déterminée étant indépendante d'une distance et/ou d'une prémagnétisation de l'objet (4, 4c).
